# EUROPÄISCHE PATENTSCHRIFT

(11) **EP 2 704 968 B1**
(45) Veröffentlichungstag und Bekanntmachung des Hinweises auf die Patenterteilung: **15.07.2015**
(21) Anmeldenummer: 12710221.8
(22) Anmeldetag: 19.03.2012
(51) Int. Cl.: B65G 47/31, B65G 47/84, B65G 54/02

(54) **TRANSFEREINRICHTUNG FÜR GEGENSTÄNDE**
TRANSFER ARRANGEMENT FOR TRANSFERRING ARTICLES
DISPOSITIF DE TRANSFERT D'OBJETS

(30) Priorität: 03.05.2011 DE 102011075174
(43) Veröffentlichungstag der Anmeldung: 12.03.2014
(73) Patentinhaber: Robert Bosch GmbH, 70442 Stuttgart (DE)
(72) Erfinder: REINISCH, Martin, 73733 Esslingen (DE); VAN DE LOECHT, Heinrich, 76461 Muggensturm (DE)
(86) Internationale Anmeldenummer: PCT/EP2012/054807
(87) Internationale Veröffentlichungsnummer: WO 2012/150086

(56) Entgegenhaltungen:
- DE-A1-102009 029 314
- US-A1- 2010 084 247

## Beschreibung

### Stand der Technik

Die Erfindung betrifft eine Transfereinrichtung für Gegenstände nach dem Oberbegriff des Anspruchs 1.

Eine derartige Transfereinrichtung ist aus der US 2010/0084247 A1 bekannt. Die bekannte Transfereinrichtung weist entlang der Förderstrecke der Überschiebeelemente eine Fördereinrichtung in Form eines Rutschbleches oder ähnliches auf, entlang dessen die Gegenstände mittels der Überschiebefinger entlang gefördert werden. Dabei findet eine Relativbewegung zwischen den Gegenständen und der Fördereinrichtung statt, was insbesondere bei bruch- bzw. stoßempfindlichen Gegenständen zu einer Beschädigung der Gegenstände führen kann.

Weiterhin ist aus der DE 10 2009 029 314 A1 der Anmelderin eine Transportvorrichtung bekannt, wobei die Position der einzelnen Schiebefinger durch entsprechende Einrichtungen entlang der Förderstrecke der Schiebefinger erfasst werden kann.

Aus der US 6,876,107 B2 ist eine weitere Transfereinrichtung für Gegenstände bekannt. Bei der bekannten Transfereinrichtung sind an einer geschlossenen Transportbahn der Transfereinrichtung Überschiebeelemente angeordnet, die mittels an der Transportbahn angeordneter, individuell bestrombarer Spulenelemente individuell bewegbar sind, indem die Spulenelemente mit an den Überschiebeelementen in Wirkverbindung angeordneten Permanentmagnetelementen zusammenwirken. Bei einem in der Fig. 5 der genannten Schrift dargestellten Ausführungsbeispiel fördert eine erste Fördereinrichtung Gegenstände der Transfereinrichtung zu, wobei die erste Fördereinrichtung im Übergabebereich der Gegenstände von der ersten Fördereinrichtung an die Überschiebeelemente der Transfereinrichtung senkrecht zur Bewegungsrichtung der Überschiebeelemente ausgerichtet ist. Nach der Übergabe der Gegenstände an die Transfereinrichtung transportiert das jeweilige Überschiebeelement den Gegenstand zur Übergabe an eine zweite Fördereinrichtung an eine andere Stelle der Transportbahn, von wo aus die Gegenstände in die zweite Fördereinrichtung abgegeben werden. In der bekannten Schrift ist weiterhin erwähnt, dass die Überschiebeelemente vorzugsweise nach einer mathematischen Funktion gemäß einem Polynom 7. Ordnung bewegt werden.

Kritisch bei dem aus der US 6,876,107 B2 bekannten Transfersystem ist, dass es zur Übernahme der Gegenstände aus der ersten Fördereinrichtung in die Transfereinrichtung durch das Überschiebeelement erforderlich ist, infolge der senkrechten Anordnung der ersten Fördereinrichtung im Übergabebereich, das Überschiebeelement aus einer Stillstandsposition bzw. aus einer Warteposition in eine bewegte Bewegung zu beschleunigen, um Beschädigungen an den Gegenständen zu vermeiden. Dadurch ist die Leistung der bekannten Transfereinrichtung beschränkt. Darüber hinaus endet die erste Fördereinrichtung bei der bekannten Schrift in einer Ebene oberhalb der Transportstrecke der Transfereinrichtung und die Gegenstände gelangen durch Abwerfen der Gegenstände von der ersten Fördereinrichtung in den Bereich des Überschiebeelements. Ein derartiges Handling der Gegenstände ist bei empfindlichen Gegenständen ebenfalls nicht möglich.

### Offenbarung der Erfindung

Ausgehend von dem dargestellten Stand der Technik liegt der Erfindung die Aufgabe zugrunde, eine Transfereinrichtung für Gegenstände nach dem Oberbegriff des Anspruchs 1 derart weiterzubilden, dass eine besonders produktschonende Übernahme von Gegenständen aus der ersten Fördereinrichtung in den Bereich der Transfereinrichtung ermöglicht wird, wobei gleichzeitig eine möglichst hohe Leistung der Transfereinrichtung realisiert werden soll. Diese Aufgabe wird bei einer Transfereinrichtung für Gegenstände mit den Merkmalen des Anspruchs 1 gelöst. Die Erfindung ermöglichst es insbesondere, dass das Überschiebeelement sich von hinten an den Gegenstand nähert, während dieser von der endlos umlaufenden Fördereinrichtung gefördert wird. Es sind somit insbesondere relativ lange Übernahme- bzw. Übergabestrecken für die Gegenstände möglich, die einen besonders produktschonenden Transport bzw. eine besonders produktschonende Übernahme bzw. Übergabe ermöglichen.

Vorteilhafte Weiterbildungen der erfindungsgemäßen Transfereinrichtung für Gegenstände sind in den Unteransprüchen aufgeführt.

Als besonders geeignete Bewegungsprofile des Transportelements zum produktschonenden Handling haben sich Polynome 5. oder 7. Ordnung oder Sinus²-Funktionen herausgestellt. Bei einem derartigen Bewegungsprofil wird ein zumindest nahezu stoßfreies Anlegen des Überschiebeelements an den jeweiligen Gegenstand erzielt.

Um entweder die Fördergeschwindigkeit im Bereich der Transfereinrichtung an die Fördergeschwindigkeit der zweiten Fördereinrichtung anzupassen, oder aber den gegenseitigen Abstand zwischen den Gegenständen im Bereich der zweiten Fördereinrichtung zu beeinflussen, ist es darüber hinaus in einer weiteren Ausgestaltung der Erfindung vorgesehen, dass das Überschiebeelement den Gegenstand im Bereich der Transportstrecke gegenüber der Geschwindigkeit im Übergabebereich von der ersten Fördereinrichtung an das Überschiebeelement beschleunigt oder verzögert.

Wichtig ist auch, dass auch die Übergabe von der Transfereinrichtung an die zweite Fördereinrichtung möglichst produktschonend erfolgt. Daher ist es in einer weiteren Ausgestaltung der Erfindung vorgesehen, dass der Gegenstand im Übergabebereich von der Transportstrecke auf die zweite Fördereinrichtung eine Geschwindigkeit aufweist, die der Fördergeschwindigkeit der zweiten Fördereinrichtung entspricht.

Um insbesondere scharfe Richtungswechsel bzw. stoßartige Belastungen bei der Übergabe bzw. Übernahme der Gegenstände zwischen den einzelnen Fördereinrichtungen und der Transfereinrichtung zu vermeiden, ist es in einer weiteren Ausgestaltung der Erfindung vorgesehen, dass die zweite Fördereinrichtung im Übergangsbereich mit der Förderstrecke ausgerichtet ist, und dass die beiden Fördereinrichtungen und die Förderstrecke eine ebene Förderebene für die Gegenstände ausbilden.

Der Abstand der Gegenstände im Bereich der zweiten Fördereinrichtung lässt sich darüber hinaus relativ einfach beeinflussen, wenn die zweite Fördereinrichtung eine veränderliche Fördergeschwindigkeit aufweist. So lässt sich bei in regelmäßigen Abständen von den Überschiebelementen geförderten Gegenständen beispielsweise der Abstand der Gegenstände auf der zweiten Fördereinrichtung verringern, indem die Geschwindigkeit der zweiten Fördereinrichtung zeitweilig verringert wird, bevor die Übergabe der Gegenstände von der Transfereinrichtung an die zweite Fördereinrichtung erfolgt.

Das erfindungsgemäße Transfersystem eignet sich nicht nur für kontinuierlich betriebene erste Fördereinrichtungen, sondern ist erfindungsgemäß auch für getaktet betriebene erste Fördereinrichtungen geeignet. In diesem Fall ist es bei spielsweise erforderlich, dass der Überschiebefinger im Übergabepunkt der Gegenstände von der ersten Fördereinrichtung an das Transfersystem seine Geschwindigkeit bis auf den Wert Null reduziert.

Besonders bevorzugt ist der Einsatz der erfindungsgemäßen Transfereinrichtung als Bestandteil einer Verpackungsanlage, wobei die zweite Fördereinrichtung die Gegenstände insbesondere einem Kartonierer oder einer Schlauchbeutelmaschine zufördert.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1 bis Fig. 3: eine erste erfindungsgemäße Transfereinrichtung für Gegenstände während verschiedener Betriebsphasen in stark vereinfachter Darstellung und
- Fig. 4: eine modifizierte Transfereinrichtung nicht Teil der Erfindung, ebenfalls in vereinfachter Darstellung.

Gleiche Bauteile bzw. Bauteile mit gleicher Funktion sind in den Figuren mit den gleichen Bezugsziffern versehen.

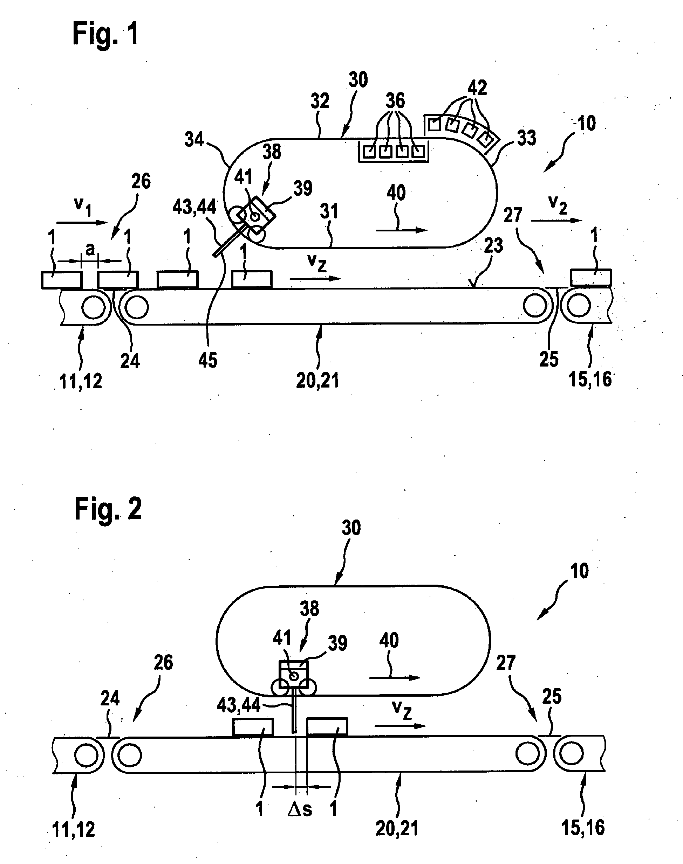

In den Fig. 1 bis 3 ist eine erste Transfereinrichtung 10 für Gegenstände 1 dargestellt. Hierbei ist die Transfereinrichtung 10 insbesondere Bestandteil einer umfangreicheren Verpackungsanlage, und bei den Gegenständen 1 kann es sich zum Beispiel um relativ stoß- bzw. bruchempfindliche Gegenstände 1 handeln, die ggf. mechanisch nur relativ gering beansprucht werden dürfen.

Die Transfereinrichtung 10 befindet sich im Anschluss an eine erste Fördereinrichtung 11, die im Ausführungsbeispiel als endlos umlaufendes Förderband 12 ausgebildet ist, das in der Fig. 1 lediglich ausschnittsweise dargestellt ist. Das Förderband 12 wird entweder kontinuierlich, oder aber getaktet angetrieben. Mittels der Transfereinrichtung 10 werden die Gegenstände 1 von der ersten Fördereinrichtung 11 an eine nachgeschaltete zweite Fördereinrichtung 15 übergeben, die im Ausführungsbeispiel ebenfalls als endlos umlaufendes Förderband 16 ausgebildet ist. Das Förderband 16 fördert die Gegenstände 1 beispielsweise einem nachgeordneten Kartonierer oder einer Schlauchbeutelmaschine zu, die beide in den Figuren nicht dargestellt sind.

Im Bereich der Transfereinrichtung 10 weist diese eine zusätzliche Fördereinrichtung 20 als Bestandteil der Transfereinrichtung 10 auf, die ebenfalls als endlos umlaufendes Förderband 21 ausgebildet ist, und die eine Transportstrecke für die Gegenstände 1 im Bereich der Transfereinrichtung 10 ausbildet.

Wichtig ist, dass die Fördereinrichtungen 11, 15 und 20 für die Gegenstände 1 eine zumindest nahezu ebene und spaltfreie Transportebene 23 ausbilden; wobei zwischen den einzelnen Fördereinrichtungen 11 und 15 bzw. 15 und 20 beispielsweise plattenförmige Elemente 24, 25 angeordnet sein können, die für einen nahezu spaltlosen bzw. spaltfreien Übergang zwischen den einzelnen Fördereinrichtungen 11, 15 und 20 sorgen. Weiterhin ist es wichtig, dass die Fördereinrichtungen 11 und 20 in ihrem Übergangsbereich 26 sowie die Fördereinrichtungen 15 und 20 in ihrem Übergangsbereich 27 zueinander fluchtend angeordnet sind, derart, dass beim Übergang der Gegenstände 1 von der ersten Fördereinrichtung 11 auf die zusätzliche Fördereinrichtung 20 sowie von der zusätzlichen Fördereinrichtung 20 auf die zweite Fördereinrichtung 15 die Gegenstände 1 geradlinig, d.h. ohne Richtungswechsel (in einer Ebene senkrecht zur Zeichenebene der Fig. 1 bis 3) gefördert werden.

Auf der ersten Fördereinrichtung 11 werden die Gegenstände 1 mit einer Geschwindigkeit v₁ gefördert. Auf der zusätzlichen Fördereinrichtung 20 werden die Gegenstände 1 mit einer Geschwindigkeit v_{z} gefördert, und auf der zweiten Fördereinrichtung 15 werden die Gegenstände 1 mit der Geschwindigkeit v₂ gefördert.

Die Transfereinrichtung 10, die im Wesentlichen oberhalb der zusätzlichen Fördereinrichtung 20 angeordnet ist, weist eine oval ausgebildete, endlose Transportbahn 30 auf. Die Transportbahn 30 umfasst zwei geradlinig und parallel zur zusätzlichen Fördereinrichtung 20 angeordnete Streckenabschnitte 31, 32 sowie zwei, die geradlinigen Streckenabschnitte 31, 32 miteinander verbindende, im Ausführungsbeispiel jeweils halbkreisförmige Kurvenabschnitte 33, 34. Entlang der Transportbahn 30 sind eine Vielzahl von, vorzugsweise individuell ansteuerbaren Spulenelementen 36 angeordnet, von denen in der Fig. 1 lediglich einige Spulenelemente 36 dargestellt sind. Die Spulenelemente 36 verlaufen jedoch entlang der gesamten Transportbahn 30, im dargestellten Ausführungsbeispiel an der Innenseite der Transportbahn 30.

Die von einer nicht dargestellten Steuereinrichtung angesteuerten Spulenelemente 36 dienen zum Antrieb von entlang der Transportbahn 30 beweglich angeordneten Transportelementen 38. Hierzu weist jedes der Transportelemente 38, von denen der besseren Übersichtlichkeit halber in den Figuren lediglich ein einziges Transportelement 38 dargestellt ist, jeweils wenigstens ein Permanentmagnetelement 39 auf, das in Wirkverbindun,g mit den Spulenelementen 36 angeordnet ist. Der Antrieb der Transportelemente 38 erfolgt dadurch, dass die Spulenelemente 36 in Bewegungsrichtung Transportelemente 38, im Ausführungsbeispiel in Richtung des Pfeils 40 im Gegenuhrzeigersinn, nacheinander derart bestromt werden, dass von den jeweiligen Spulenelementen 36 eine anziehende bzw. abstoßende Kraft, auf die Permarientmagnetelemente 39 an den Transportelementen 38 ausgeübt wird, die einen Antrieb des jeweiligen Transportelements 38 bewirkt.

Zusätzlich weist jedes Transportelement 38 ein erstes Mittel 41 auf, das der Positionserkennung des jeweiligen Transportelements 38 entlang der Transportbahn 30 dient. Hierzu wirkt das erste Mittel 41 beispielsweise mit ortsfest an der Transportbahn 30 angeordneten zweiten Mitteln 42 zusammen, von denen in der Fig. 1 ebenfalls nur einige zweite Mittel 42 dargestellt sind. Die Mittel 41, 42 können zum Beispiel Hallelemente aufweisen. Die Position der Transportelemente 38 wird der Steuereinrichtung der Transfereinrichtung 10 als Eingangssignal zugeführt, woraus diese eine entsprechende Ansteuerung bzw. Bestromung der Spulenelemente 36 errechnet.

Durch die Bestromung der Spulenelemente 36 kann das Transportelement 38 mit einem beliebigen Geschwindigkeitsprofil bewegt werden. Insbesondere sind dabei Geschwindigkeitsprofile denkbar, die entsprechend als Polynom 5. oder 7. Ordnung oder als Sinusquadratfunktion ausgebildet sind.

Wie anhand der Fig. 1 bis 3 erkennbar ist, weist die zusätzliche Fördereinrichtung 20 eine derartige Länge auf, dass diese die Länge der Transportbahn 21 bzw. des einen geradlinigen Streckenabschnitts 31 sowie der beiden an dem Streckenabschnitt 31 sich anschließenden Kurvenabschnitte 33, 34 überragt. Weiterhin ist erkennbar, dass jedem der Transportelemente 38 ein als Schiebefinger 43 ausgebildetes Überschiebelement 44 zugeordnet ist. Der Schiebefinger 43 ist vorzugsweise als Formatsteil austauschbar an dem Transportelement 38 befestigt. Der Schiebefinger 43 weist eine Anlagefläche 45 zur Anlage an dem jeweiligen Gegenstand 1 auf.

Die Gegenstände 1 werden auf der ersten Fördereinrichtung 11 insbesondere in ungleichmäßigen Abständen a zueinander gefördert. Mit diesen Abständen a geraten die Gegenstände 1 auch von der ersten Fördereinrichtung 11 auf die zusätzliche Fördereinrichtung 20, wie dies insbesondere anhand der Fig. 1 erkennbar, ist. Ein Transportelement 38 zum Fördern eines Gegenstands 1 wird von der Steuereinrichtung der Transfereinrichtung 10. dabei derart angesteuert, dass dessen Schiebefinger 43 in dem Kurvenabschnitt 333 derart zwischen zwei voneinander in dem Abstand a beabstandete Gegenstände 1 eintaucht, wobei keiner der beiden Gegenstände 1 von dem Schiebefinger 43 berührt wird.

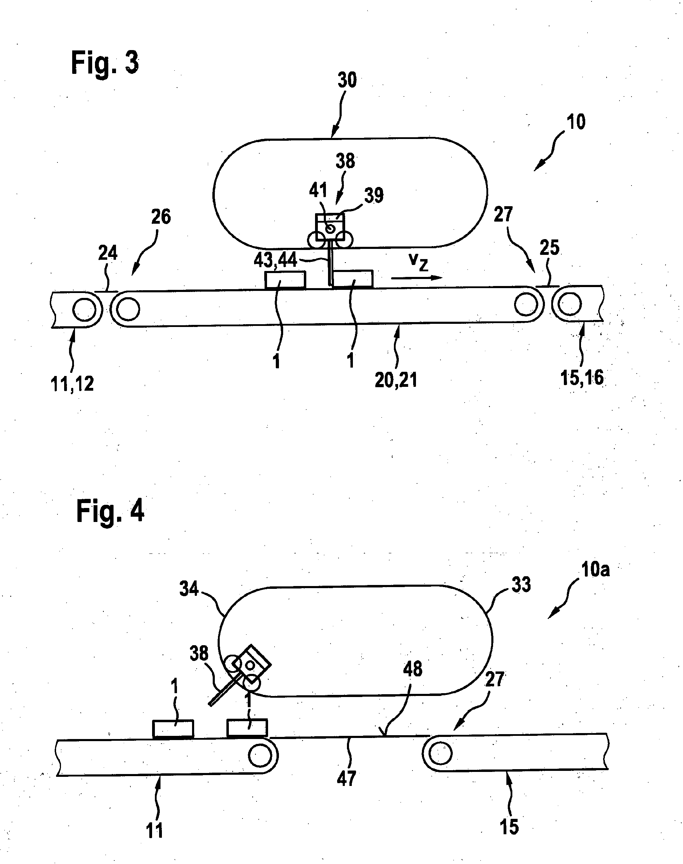

Entsprechend der Darstellung der Fig. 2 und 3 wird das betreffende Transport-element 38 anschließend bis auf eine Geschwindigkeit beschleunigt, die größer. ist als die Geschwindigkeit v_{z} des Gegenstands 1 auf der zusätzlichen Fördereinrichtung 20, sodass sich der Abstand Δs zwischen dem Gegenstand 1 und dem Schiebefinger 43 suxessive verringert. Dies erfolgt mittels der angesprochenen Geschwindigkeitsprofile derart, dass vorzugsweise ein zumindest nahezu stoßfreies Anliegen des Schiebefingers 43 an den ihm zugeordneten Gegenstand 1 entsprechend der Fig. 3 erzielt wird.

Sobald der Schiebefinger 43 in Anlagekontakt mit dem betreffenden Gegenstand 1 ist, kann der betreffende Schiebefinger 43 bzw. sein Transportelement 38 lauf eine Geschwindigkeit beschleunigt werden, die größer ist als die Geschwindigkeit v_{z} der zusätzlichen Fördereinrichtung 20. Dadurch wird eine Vergrößerung des Abstandes zwischen den aufeinanderfolgenden Gegenständen 1 im Bereich der zusätzlichen Fördereinrichtung 20 und insbesondere ein gleicher Abstand zwischen den Gegenständen 1 (im Gegensatz zu den auf der ersten Fördereinrichtung 11 in ungleichförmigen Abständen geförderten Gegenständen 1) bewirkt. Im weiteren Verlauf der Förderung wird der Schiebefinger 43 beispielsweise wieder verzögert, sodass sich dieser von seinem betreffenden Gegenstand 1 löst und im weiteren Verlauf entlang des Kurvenabschnitts 34 außer Wirkverbindung mit dem Gegenstand 1 gerät.

Um eine möglichst ruckfreie Förderung der Gegenstände 1 auf den Fördereinrichtungen 11, 15 und 20 zu ermöglichen weisen diese insbesondere eine gleiche Fördergeschwindigkeit v₁, v₂ und auf.

In der Fig. 4 ist eine Transfereinrichtung 10a nicht Teil der Erfindung dargestellt. Diese unterscheidet sich von der Transfereinrichtung 10 dadurch, dass anstelle der zusätzlichen Fördereinrichtung 20 eine insbesondere ebene Rutschplatte 47 vorgesehen ist, auf die die Gegenstände 1 von der ersten Fördereinrichtung 11 gefördert werden. Von der Rutschplatte 47 gelangen die Gegenstände 1 wiederum auf die zweite Fördereinrichtung 15. Die Rutschplatte 47 bildet zusammen mit dem Fördertrum der beiden Fördereinrichtungen 11, 15 ebenfalls eine nahezu spaltfreie, ebene Transportebene 48 aus. Weiterhin ist wesentlich, dass bei der Transfereinrichtung 10a das entsprechende Transportelement 38 bereits im Anlagekontakt mit dem Gegenstand 1 ist, solange dieser sich noch auf der ersten Fördereinrichtung 11 befindet. Auch hierbei wird das Transportelement 38 derart bewegt, dass es zumindest nahezu stoßfrei auf den Gegenstand 1 trifft. Dadurch wird insgesamt ein ruckfreies Überschieben des Gegenstandes 1 von der ersten Fördereinrichtung 11 auf die Rutschplatte 47 erzielt, auf der die Gegenstände 1 entlang rutschen. Dies wird dadurch erzielt, dass das Überschiebeelement 44 im Kurvenabschnitt 34, also noch in Höhe der ersten Fördereinrichtung 11, in Richtung des Gegenstand 1 einschwenkt. Während der Förderung der Gegenstände 1 auf der Rutschplatte 47 können diese mittels der Transportelemente 38 mit einer beliebigen Geschwindigkeit gefördert werden. Dies dient insbesondere dazu, den Abstand der Gegenstände 1 auf der nachfolgenden zweiten Fördereinrichtung 15 zu beeinflussen. Wichtig ist jedoch, dass im Übergangsbereich 27 von der Rutschplatte 47 auf die zweite Fördereinrichtung 15 der Schiebefinger 43 bzw. der Gegenstand 1 eine derartige Geschwindigkeit aufweist, dass diese der Geschwindigkeit der zweiten Fördereinrichtung 15 entspricht, wobei das Überschiebeelement 44 im Kurvenabschnitt 33, der in Überdeckung mit der zweiten Fördereinrichtung 15 angeordnet ist, von dem Gegenstand 1 wegschwenkt. Die soweit beschriebenen Transfereinrichtungen 10, 10a können in vielfältiger Art und Weise abgewandelt bzw. modifiziert werden, ohne vom Erfindungsgedanken abzuweichen. So ist es beispielsweise denkbar, die erste Fördereinrichtung 11 nicht kontinuierlich, sondern getaktet anzutreiben. Weiterhin ist es denkbar, die zweite Fördereinrichtung 15 mit einer variablen Geschwindigkeit anzutreiben, um beispielsweise den Abstand zwischen den einzelnen Gegenständen 1 auf der zweiten Fördereinrichtung 15 zu vergrößern bzw. zu verkleinern.

In dem dargestellten Ausführungsbeispiel verläuft der Transportweg der Gegenstände 1 unterhalb der Transportbahn 30. Es liegt auch im Rahmen der Erfindung, dass die Gegenstände 1 oberhalb der Transportbahn 30 mittels der Schiebefinger 43 gefördert werden. In diesem Fall kann es beispielsweise vorgesehen sein, dass die zusätzliche Fördereinrichtung 20 bzw. die Rutschplatte 47 einen entsprechenden Längsschlitz aufweist, durch den der betreffende Schiebefinger 43 von unten her durch ragt, um damit in Anlagekontakt mit dem Gegenstand 1 zu geraten.

## Patentansprüche

1. Transfereinrichtung (10; 10a) für Gegenstände (1), mit einer ersten Fördereinrichtung (11) für die Gegenstände (1), auf der die Gegenstände (1) in insbesondere ungleichmäßigen Abständen (a) zueinander gefördert werden, mit wenigstens einem Transportelement (38) mit einem Überschiebeelement (44) zur Anlage an einen Gegenstand (1) entlang einer Transportstrecke im Bereich der Transfereinrichtung (10; 10a) und zur Weitergabe von der Transportstrecke an eine zweite Fördereinrichtung (15), wobei das wenigstens eine Transportelement (38) entlang einer geschlossenen Transportbahn (30) beweglich angeordnet ist, die eine Vielzahl von vorzugsweise individuell bestrombaren Spulenelementen (36) aufweist, die in Wirkverbindung mit wenigstens einem, an dem Transportelement (38) zumindest mittelbar angeordneten Permanentmagnetelement (39) ist, und bei einer Bestromung der Spulenelemente (36) eine Bewegung des Transportelements (38) entlang der Transportbahn (30) bewirkt, wobei eine Steuereinrichtung die Spulenelemente (36) zur Erzeugung eines Bewegungsprofils des Transportelements (38) ansteuert, wobei die erste Fördereinrichtung (11) in einem Übergabebereich (26) der Gegenstände (1) an die Transportstrecke der Transfereinrichtung (10) fluchtend zur Transportstrecke ausgerichtet ist, und wobei das Bewegungsprofil des Transportelements (38) derart ausgebildet ist, dass bei der Übernahme des Gegenstands (1) durch das Überschiebeetement (44) das Überschiebeelement (44) zumindest nahezu stoßfrei auf den Gegenstand (1) auftrifft,
**dadurch gekennzeichnet, dass**
eine Einrichtung mit Mitteln (41, 42) zur Erkennung der Position des Transportelements (38) entlang der Transportbahn (30) vorgesehen ist, dass die Transportstrecke als zusätzliche, endlos umlaufende Fördereinrichtung (20) ausgebildet ist, auf der die Gegenstände (1) mit konstanter Geschwindigkeit (v_{z}) gefördert werden, dass zumindest der Anlagekontakt des Überschiebeelements (44) an den Gegenstand (1) im Bereich der zusätzlichen Fördereinrichtung (20) erfolgt,
dass das Bewegungsprofil des Transportelementes derart ist, dass das Überschiebeelement (44) sich von hinten an den Gegenstand (1) annähert, während dieser von der endlos umlaufenden Fördereinrichtung (20) gefördert wird, und das betreffende Transportelement (38) anschließend bis auf eine Geschwindigkeit, die grösser ist als die Geschwindigkeit (v_{z}) des Gegenstands (1) auf der zusätzlichen Fördereinrichtung (20), beschleunigt ist,
sodass sich der Abstand (Δs) zwischen dem Gegenstand (1) und dem Überschiebeelement (44) sukzessive verringert;
und dass das Bewegungsprofil des Transportelementes derart ist, dass das ein zumindest nahezu stoßfreies Anlegen des Überschiebeelementes (44) an den ihm zugeordneten Gegenstand (1) erzielt wird,
und dass, sobald das Überschiebeelement (44) in Anlagekontakt mit dem betreffenden Gegenstand (1) ist, das betreffende Überschiebeelement (44) auf eine Geschwindigkeit beschleunigt werden kann, die grösser ist als die Geschwindigkeit (v_{z}) der zusätzlichen Fördereinrichtung (20).

2. Transfereinrichtung nach Anspruch 1,
**dadurch gekennzeichnet,**
**dass** das Bewegungsprofil des Transportelements (38) als Polynom 5-ter oder 7-ter Ordnung oder als Sin²- Funktion ausgebildet ist.

3. Transfereinrichtung nach Anspruch 1 oder 2,
**dadurch gekennzeichnet,**
**dass** das Überschiebeelement (44) den Gegenstand (1) im Bereich der Transportstrecke gegenüber der Geschwindigkeit (v₁) im Übergangsbereich (26) von der ersten Fördereinrichtung (11) an das Überschiebeelement (44) beschleunigt oder verzögert.

4. Transfereinrichtung nach einem der Ansprüche 1 bis 3,
**dadurch gekennzeichnet,**
**dass** der Gegenstand (1) im Übergangsbereich (27) von der Transportstrecke auf die zweite Fördereinrichtung (15) eine Geschwindigkeit (v_{z}) aufweist, die der Fördergeschwindigkeit (v₂) der zweiten Fördereinrichtung (15) entspricht.

5. Transfereinrichtung nach einem der Ansprüche 1 bis 4,
**dadurch gekennzeichnet,**
**dass** die zweite Fördereinrichtung (15) im Übergangsbereich (27) mit der Förderstrecke der Transfereinrichtung (10; 10a) ausgerichtet ist, und dass die beiden Fördereinrichtungen (11, 15) und die Förderstrecke der Transfereinrichtung (10; 10a) eine ebene Transportebene (23; 48) für die Gegenstände (1) ausbilden.

6. Transfereinrichtung nach einem der Ansprüche 1 bis 5,
**dadurch gekennzeichnet,**
**dass** die zweite Fördereinrichtung (15) eine veränderliche Fördergeschwindigkeit (v₂) aufweist.

7. Transfereinrichtung nach einem der Ansprüche 1 bis 6,
**dadurch gekennzeichnet,**
**dass** die erste Fördereinrichtung (11) getaktet angetrieben ist.

8. Transfereinrichtung nach einem der Ansprüche 1 bis 7,
**dadurch gekennzeichnet,**
**dass** die Transfereinrichtung (10; 10a) Bestandteil einer Verpackungsanlage ist, und dass die zweite Fördereinrichtung (15) die Gegenstände insbesondere einem Kartonierer oder einer Schlauchbeutelmaschine zufördert.

## Claims

1. Transfer arrangement (10; 10a) for transferring articles (1), having a first conveying arrangement (11) for the articles (1), on which the articles (1) are conveyed at in particular non-uniform spacings (a) from one another, and having at least one transporting element (38) with a transfer element (44) for butting against an article (1) along a transporting route in the region of the transfer arrangement (10; 10a) and for transfer from the transporting route to a second conveying arrangement (15), wherein the at least one transporting element (38) is arranged such that it can be moved along a closed transporting path (30) which has a multiplicity of preferably individually energizable coil elements (36) which are in operative connection with at least one permanent-magnet element (39), arranged at least indirectly on the transporting element (38), and cause the transporting element (38) to move along the transporting path (30) when the coil elements (36) are energized, wherein a control arrangement activates the coil elements (36) in order to generate a movement profile of the transporting element (38), wherein the first conveying arrangement (11), in a transfer region (26) for transferring the articles (1) to the transporting route of the transfer arrangement (10), is aligned with the transporting route, and wherein the movement profile of the transporting element (38) is such that, when the article (1) is received by the transfer element (44), the transfer element (44) comes into contact with the article (1) in an at least more or less impact-free manner,
**characterized in that**
there is an arrangement with means (41, 42) for detecting the position of the transporting element (38) along the transporting path (30), **in that** the transporting route is designed as an additional, endlessly circulating conveying arrangement (20) on which the articles (1) are conveyed at constant speed (v_{z}), **in that** at least the abutting contact of the transfer element (44) against the article (1) takes place in the region of the additional conveying arrangement (20), **in that** the movement profile of the transporting element is such that the transfer element (44) approaches the article (1) from behind as the latter is being conveyed by the endlessly circulating conveying arrangement (20), and the relevant transporting element (38) is then accelerated to a speed which is greater than the speed (v_{z}) of the article (1) on the additional conveying arrangement (20), and therefore the distance (Δs) between the article (1) and the transfer element (44) gradually decreases; and **in that** the movement profile of the transporting element is such that the transfer element (44) is positioned in an at least more or less impact-free manner against the associated article (1), and **in that**, as soon as the transfer element (44) is in abutting contact with the relevant article (1), the relevant transfer element (44) can be accelerated to a speed which is greater than the speed (v_{z}) of the additional conveying arrangement (20).

2. Transfer arrangement according to Claim 1,
**characterized**
**in that** the movement profile of the transporting element (38) is in the form of a fifth-order or seventh-order polynomial or of a sine² function.

3. Transfer arrangement according to Claim 1 or 2,
**characterized**
**in that** the transfer element (44) accelerates or decelerates the article (1) in the region of the transporting route in relation to the speed (v₁) in the transfer region (26) from the first conveying arrangement (11) to the transfer element (44).

4. Transfer arrangement according to one of Claims 1 to 3,
**characterized**
**in that** the article (1), in the transfer region (27) from the transporting route to the second conveying arrangement (15), has a speed (v_{z}) which corresponds to the conveying speed (v₂) of the second conveying arrangement (15).

5. Transfer arrangement according to one of Claims 1 to 4,
**characterized**
**in that** the second conveying arrangement (15), in the transfer region (27), is aligned with the conveying route of the transfer arrangement (10; 10a), and in that the two conveying arrangements (11, 15) and the conveying route of the transfer arrangement (10; 10a) form a planar transporting plane (23; 48) for the articles (1).

6. Transfer arrangement according to one of Claims 1 to 5,
**characterized**
**in that** the second conveying arrangement (15) has a variable conveying speed (v₂).

7. Transfer arrangement according to one of Claims 1 to 6,
**characterized**
**in that** the first conveying arrangement (11) is driven cyclically.

8. Transfer arrangement according to one of Claims 1 to 7,
**characterized**
**in that** the transfer arrangement (10; 10a) is a constituent part of a packaging installation, and in that the second conveying arrangement (15) feeds the articles, in particular, to a cartoner or a tubular-bag machine.

## Revendications

1. Dispositif de transfert (10 ; 10a) pour des objets (1), comprenant un premier dispositif de transport (11) pour les objets (1), sur lequel sont transportés les objets (1) à distances (a) notamment irrégulières les uns des autres, comprenant au moins un élément de transport (38) avec un élément de transfert (44) pour l'application contre un objet (1) le long d'une section de transport dans la région du dispositif de transfert (10 ; 10a) et pour le passage de la section de transport à un deuxième dispositif de transport (15), l'au moins un élément de transport (38) étant disposé de manière déplaçable le long d'une bande de transport fermée (30), qui présente une pluralité d'éléments de bobine (36) pouvant de préférence être alimentés en courant individuellement, qui est en liaison fonctionnelle avec au moins un élément d'aimant permanent (39) disposé au moins indirectement sur l'élément de transport (38), et dans le cas d'une alimentation en courant des éléments de bobine (36), provoque un déplacement de l'élément de transport (38) le long de la bande de transport (30), un dispositif de commande commandant les éléments de bobine (36) pour générer un profil de déplacement de l'élément de transport (38), le premier dispositif de transport (11) étant orienté dans une région de transfert (26) des objets (1) à la section de transport du dispositif de transfert (10) en affleurement avec la section de transport, et le profil de déplacement de l'élément de transport (38) étant réalisé de telle sorte que lors du transfert de l'objet (1) par l'élément de transfert (44), l'élément de transfert (44) vienne en contact au moins presque sans choc avec l'objet (1),
**caractérisé**
**en ce qu'**un dispositif est pourvu de moyens (41, 42) pour reconnaître la position de l'élément de transport (38) le long de la bande de transport (30), en ce que la section de transport est réalisée sous forme de dispositif de transport (20) supplémentaire en circulation sans fin, sur lequel les objets (1) sont transportés à une vitesse constante (v_{z}), en ce qu'au moins le contact d'application de l'élément de transfert (44) contre l'objet (1) s'effectue dans la région du dispositif de transport supplémentaire (20),
**en ce que** le profil de déplacement de l'élément de transport est tel que l'élément de transfert (44) se rapproche par l'arrière de l'objet (1), tandis que celui-ci est transporté par le dispositif de transport (20) en circulation sans fin, et l'élément de transport concerné (38) est ensuite accéléré jusqu'à une vitesse supérieure à la vitesse (v_{z}) de l'objet (1) sur le dispositif de transport supplémentaire (20), de sorte que la distance (Δs) entre l'objet (1) et l'élément de transfert (44) se réduise de manière successive ; et en ce que le profil de déplacement de l'élément de transport est tel que l'on obtienne une application au moins presque sans choc de l'élément de transfert (44) contre l'objet (1) qui lui est associé,
et **en ce que** dès que l'élément de transfert (44) est en contact d'application avec l'objet concerné (1), l'élément de transfert concerné (44) peut être accéléré à une vitesse supérieure à la vitesse (v_{z}) du dispositif de transport supplémentaire (20).

2. Dispositif de transfert selon la revendication 1,
**caractérisé en ce que**
le profil de déplacement de l'élément de transport (38) est réalisé sous forme de polynôme du 5e ou du 7e ordre ou sous forme de fonction sin².

3. Dispositif de transfert selon la revendication 1 ou 2,
**caractérisé en ce que**
l'élément de transfert (44) accélère ou ralentit l'objet (1) dans la région de la section de transport par rapport à la vitesse (v₁) dans la région de transition (26) du premier dispositif de transport (11) à l'élément de transfert (44).

4. Dispositif de transfert selon l'une quelconque des revendications 1 à 3,
**caractérisé en ce que**
l'objet (1) dans la région de transition (27) de la section de transport au deuxième dispositif de transport (15) présente une vitesse (v_{z}) qui correspond à la vitesse de transport (v₂) du deuxième dispositif de transport (15).

5. Dispositif de transfert selon l'une quelconque des revendications 1 à 4,
**caractérisé en ce que**
le deuxième dispositif de transport (15) est aligné dans la région de transition (27) avec la section de transport du dispositif de transfert (10 ; 10a), et
**en ce que** les deux dispositifs de transport (11, 15) et la section de transport du dispositif de transfert (10 ; 10a) constituent un plan de transport plan (23 ; 48) pour les objets (1).

6. Dispositif de transfert selon l'une quelconque des revendications 1 à 5,
**caractérisé en ce que**
le deuxième dispositif de transport (15) présente une vitesse de transport variable (v₂).

7. Dispositif de transfert selon l'une quelconque des revendications 1 à 6,
**caractérisé en ce que**
le premier dispositif de transport (11) est entraîné de manière cadencée.

8. Dispositif de transfert selon l'une quelconque des revendications 1 à 7,
**caractérisé en ce que**
le dispositif de transfert (10 ; 10a) fait partie d'une installation d'emballage et **en ce que** le deuxième dispositif de transport (15) achemine les objets notamment à une encartonneuse ou une machine à sachets tubulaires.
